**Europäisches Patentamt**

**European Patent Office**

**Office européen des brevets**

(11) Veröffentlichungsnummer: **0 301 171 B1**

# EUROPÄISCHE PATENTSCHRIFT

(45) Veröffentlichungstag der Patentschrift:
22.05.91 Patentblatt 91/21

(21) Anmeldenummer: **88105757.4**

(22) Anmeldetag: **12.04.88**

(51) Int. Cl.⁵: **F16F 13/00, F16F 9/46**

(54) **Hydraulisch dämpfendes Gummilager.**

(30) Priorität: **02.07.87 DE 3721866**

(43) Veröffentlichungstag der Anmeldung:
**01.02.89 Patentblatt 89/05**

(45) Bekanntmachung des Hinweises auf die
Patenterteilung:
**22.05.91 Patentblatt 91/21**

(84) Benannte Vertragsstaaten:
**BE FR GB IT NL SE**

(56) Entgegenhaltungen:
**DE-A- 3 316 025**
**DE-A- 3 423 698**

(56) Entgegenhaltungen:
**US-A- 4 635 910**
**PATENT ABSTRACTS OF JAPAN, Band 11, Nr. 347 (M-641)[2794], 13. November 1987; & JP-A-62 127 539 (NISSAN MOTOR CO., LTD) 09-06-1987**

(73) Patentinhaber: **Boge A.G.**
**Bogestrasse 50**
**W-5208 Eitorf/Sieg (DE)**

(72) Erfinder: **Maassen, Jürgen, Dipl.-Ing.**
**Schlunkweg 1/B**
**W-5042 Erfstadt 1 (DE)**
Erfinder: **Hafner, Klaus**
**Asbacher Strasse 37**
**W-5467 Kretzhaus (DE)**

EP 0 301 171 B1

## Beschreibung

Die Erfindung bezieht sich auf ein hydraulisch dämpfendes Gummilager, insbesondere Motorlager für Kraftfahrzeuge, mit zwei gegenüberliegenden Befestigungsvorrichtungen, einem dazwischen angeordneten elastomeren Federkörper und einem an einer Befestigungsvorrichtung angeordneten steuerbaren Elektromagneten, bestehend aus Spule und Anker, wobei der Innenraum des Gummilagers in zwei mit Dämpfungsflüssigkeit gefüllte Kammern unterteilt ist, die über mindestens eine Drosselstelle miteinander verbunden sind, wobei die Spule und der axial bewegliche Anker des Elektromagneten teilweise als Trennwand zwischen den Kammern ausgebildet sind.

Derartige Gummilager dienen der Lagerung von Antriebsaggregaten in Fahrzeugen aller Art. Bei der Lagerung von Verbrennungsmotoren in Kraftfahrzeugen ist einerseits zur Vermeidung der Geräuschübertragung eine möglichst weiche Lagerung mit geringer Eigendämpfung erforderlich, die jedoch die von der Fahrbahn angeregten Motorbewegungen sehr groß werden und fast ungedämpft ausschwingen läßt. Andererseits können die großen Motorbewegungen durch harte Lagerungen bzw. separate Stuckerdämpfer verringert werden, was jedoch wieder zu erheblichen Geräuschübertragungen auf die Karosserie führt.

Gummilager dieser Art sind bekannt (z.B. DE-OS 33 16 025), bei denen ein elastisches Lager mit einem zwischen Lagermontierhilfen eingesetzten, elastomeren Federkörper und einem an der einen Lagermontierhilfe befestigten, steuerbaren Magneten zusammenwirkt. Der steuerbare Magnet verändert dabei eine Drosselstelle und somit die Federeigenschaft des Lagers.

Desweiteren sind hydraulisch dämpfende Gummilager (z.B. DE-OS 34 23 698) bekannt, bei denen eine mit Flüssigkeit gefüllte Kammer expandierbar und kontraktierbar ist. In der, in der Kammer enthaltenen Flüssigkeit werden mittels eines Schwingungselementes gegenphasige pulsierende Druckschwankungen erzeugt. Das Schwingungselement weist ein scheibenförmiges, magnetisches Teil auf, welches ein Teil einer die Kammer begrenzenden Trennwand darstellt und welches mittels Magnetspulen aktivierbar ist.

Darüber hinaus ist ein Lager bekannt (z.B. US-PS 4.635.919), bei dem zwei Kammern über eine Trennwand begrenzt sind. Die Trennwand enthält eine flexible Membran und ist zur Erzeugung eines Bypasses über einen Elektromagneten axial auslenkbar.

Aufgabe der Erfindung ist es, ein Gummilager zu schaffen, bei dem eine variable, dynamische Dämpfung durch eine elektrische Ansteuerung und gleichzeitiger hydraulischer Beeinflussung des Drosselkanales optimiert werden kann.

Zur Lösung dieser Aufgabe ist erfindungsgemäß vorgesehen, daß als Drosselstelle ein schraubenförmig um die Lagerachse verlaufender, in Längsrichtung der Lagerachse geteilter Kanal vorgesehen ist, wobei eine Hälfte des Kanales in einem feststehenden, der Spule zugeordneten Bauteil und die andere Hälfte des Kanales im axial beweglichen Anker angeordnet ist.

Vorteilhaft ist bei dieser Ausführungsform, daß eine Dämpfungsregelung über eine externe Einstellmöglichkeit des Elektromagneten vorgenommen werden kann, so daß fahrdynamische Schwingungen über den Magnetanker durch Regelung des elektromagnetischen Feldes variabel gedämpft herden können. Auftretende Querkräfte werden durch einen elastomeren Federkörper aufgefangen. Zusätzlich erfolgt noch eine Drosselung des Dämpfungsmittels über den Drosselkanal, wobei eine Querschnittsveränderung über der gesamten Länge des Drosselkanales erzielt werden kann.

Ein bevorzugtes Ausführungsbeispiel der Erfindung ist in den Zeichnungen näher erläutert.

Es zeigt:

Figur 1 einen axialen Längsschnitt eines Gummilagers gemäß der Erfindung.

Figur 2 und 3 jeweils die Steuerung zweier Gummilarger.

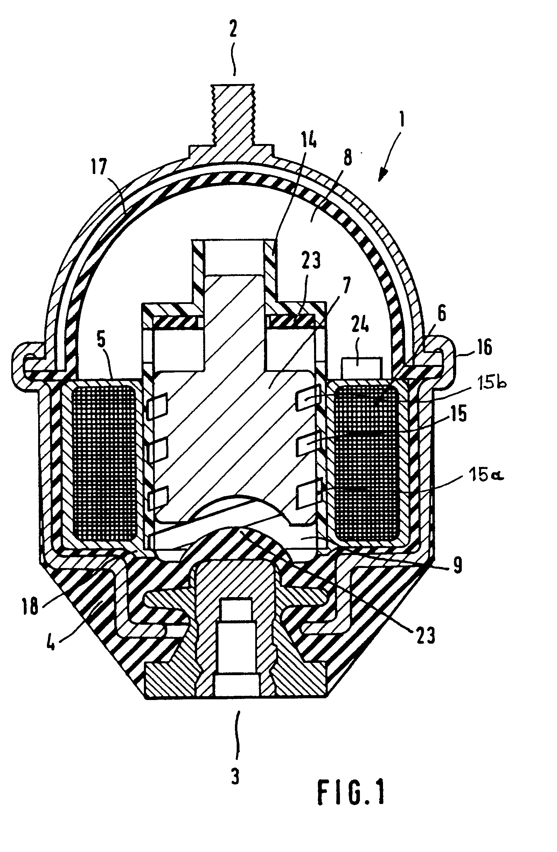

Das Gummilager 1 nach Figur 1 besitzt zwei in axialer Richtung einander gegenüberliegende Befestigungsvorrichtungen 2 und 3. Zwischen der Befestigungsvorrichtung 3 und dem Gehäuse 16 ist ein elastomerer Federkörper 4 einvulkanisiert. Im Gehäuse 16 befindet sich ein Elektromagnet 5, bestehend aus Spule 6 und Anker 7. Der Elektromagnet 5 teilt den Innenraum des Motorlagers 1 in eine obere Kammer 8 und in eine untere Kammer 9. Die Kammern 8 und 9 sind über einen Kanal 15 miteinander verbunden und mit Dämpfungsflüssigkeit gefüllt. Der Kanal 15 entspricht dabei der Drosselstelle und ist als ein schraubenförmig um die Lagerachse verlaufender, in Längsrichtung der Lagerachse geteilter Kanal vorgeshen, wobei eine Hälfte (15a) des Kanales (15) in einem feststehenden, der Spule (6) zugeordneten Bauteil und die andere Hälfte (15b) des Kanales (15) im axial berveglichen Anker (7) angeordnet ist. Bei Einleitung von Schwingungen des Motors eines Kraftfahrzeuges über die Befestigungsvorrichtung 2 wird der Anker 7 axial bewegt und verdrängt Dämpfungsflüssigkeit aus der einen Kammer über den Kanal 15 in die andere Kammer. Während der axialen Bewegung des Ankers 7 verändert sich der Querschnitt des Kanales 15 und kann über die Ansteuerung des Elektromagneten zusätzlich in der gewünschten Weise gesteuert verden.

Im Bereich der Befestigungsvorrichtung 3 ist das Gehäuse 16 in Form eines Bajonettverschlusses über den elastomeren Federkörper 4 gehalten, so daß bei Zerstörung des elastomeren Federkörpers 4 die Lagerteile zueinander unverlierbar gehalten sind.

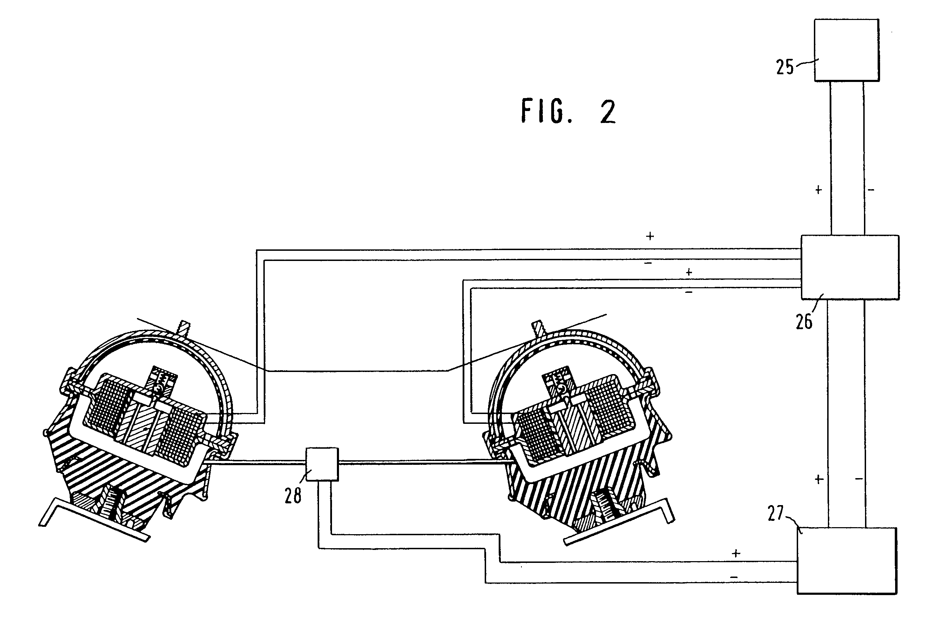

Figur 2 zeigt eine Anordnung von zwei nicht erfindungsgemäßen Gummilagern 1, welche über eine Batterei 25, eine Regelelektronik 26, einem Verstärker 27 und einem Differenzdruckaufnehmer 28 gesteuert werden.

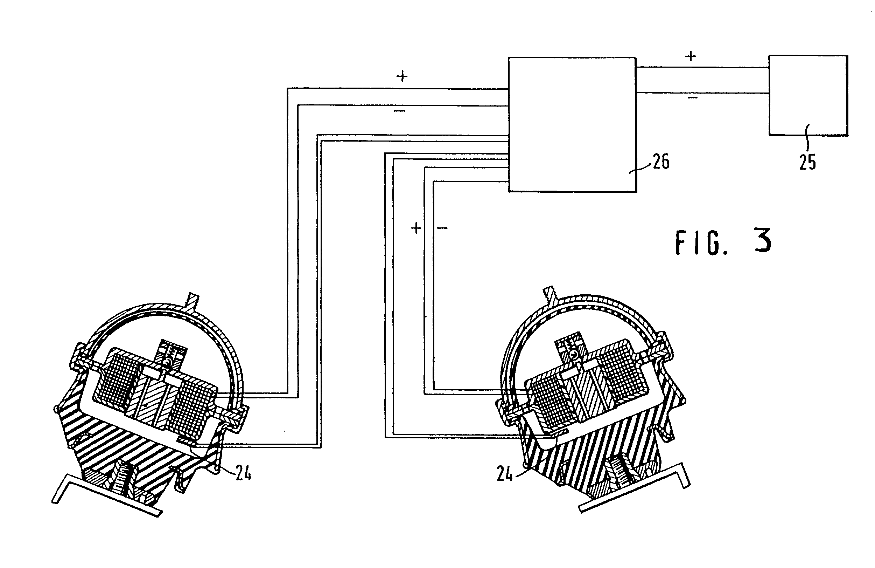

Im Gegensatz hierzu werden die Gummilager 1 in Figur 3 lediglich über eine Batterei 25 und einer Regelelektronik 26 angesteuert, wobei in den unteren Kammern 9 jeweils eine Druckmeßsonde 24 entsprechende Steuersignale an die Regelelektronik 26 geben.

Bezugszeichenliste

1 - Gummilager
2 - Befestigungsvorrichtung (oben)
3 - Befestigungsvorrichtung (unten)
4 - Federkörper
5 - Elektromagnet
6 - Spule
7 - Anker
8 - Kammer (oben)
9 - Kammer (unten)
14 - Lagerbuchse des Ankers
15, 15a, 15b - Kanal (Drosselstelle)
16 - Gehäuse
17 - Gummibalg
18 - Trennwand
23 - oberer/unterer Anschlag
24 - Druckmeßsonde
25 - Batterie
26 - Regelelektronik
27 - Verstärker
28 - Differenzdruckaufnehmer

## Ansprüche

1. Hydraulisch dämpfendes Gummilager (1), insbesondere Motorlager für Kraftfahrzeuge, mit zwei gegenüberliegenden Befestigungsvorrichtungen (2, 3) einem dazwischen angeordneten elastomeren Federkörper (4) und einem an einer Befestigungvorrichtung angeordneten steuerbaren Elektromagneten (5), bestehend aus Spule (6) und Anker (7), wobei der Innenraum des Gummilagers (1) in zwei mit Dämpfungsflüssgkeit gefüllte Kammern (8, 9) unterteilt ist, die über mindestens eine Drosselstelle (15) miteinander verbunden sind, wobei die Spule (6) und der axial bewegliche Anker (7) des Elektromagneten (5) teilweise als Trennwand (18) zwischen den Kammern (8, 9) ausgebildet sind, dadurch gekennzeichnet, daß als Drosselstelle ein schraubenförmig um die Lagerachse (14) verlaufender, in Längsrichtung der Lagerachse(14) geteilter Kanal (15) vorgesehen ist, wobei eine Hälfte (15a) des Kanales (15) in einem feststehenden, der Spule (6) zugeordneten Bauteil und die andere Hälfte (15b) des Kanales (15) im axial beweglichen Anker (7) angeordnet ist.

## Claims

1. Hydraulically damped elastomeric mounting (1), in particular an engine mounting for motor vehicles, with two mutually opposed attachment devices (2, 3), an elastomeric spring body (4) arranged between them and a controllable electromagnet (5) arranged on one attachment device and comprising a coil (6) and armature (7), the interior of the rubber mounting (1) being divided into two chambers (8, 9) filled with damping fluid and connected together through at least one throttle point (15), the coil (6) and the axially movable armature (7) of the electromagnet (5) being formed partially as a dividing wall (18) between the chambers (8, 9),
characterised in that
as the throttle point a helical passage (15) is provided, extending around the axis (14) of the mounting and divided in the direction of the length of the axis (14), one half (15a) of the passage (15) being arranged in a fixed component associated with the coil (6) and the other half (15b) of the passage (15) being arranged in the axially movable armature (7).

## Revendications

1. Support caoutchouté (1) à amortissement hydraulique, en particulier support de moteur pour véhicules automobiles, comprenant deux dispositifs de fixation (2, 3) opposés, un corps de suspension (4) en élastomère placé entre eux et un électroaimant (5) commandé, prévu sur un dispositif de fixation et formé d'une bobine (6) et d'une armature (7), l'espace intérieur du support caoutchouté (1) étant divisé en deux chambres (8, 9) remplies de liquide d'amortissement et reliées l'une à l'autre a travers au moins un point d'étranglement (15), la bobine (6) et l'armature (7) – axialement mobile – de l'électroaimant (5) étant réalisées en partie comme une cloison (18) entre les chambres (8, 9),
caractérisé en ce que, en tant que point d'étranglement, on a prévu un canal (15) s'étendant en hélice autour de l'axe (14) du support et divisé dans le sens de la longueur de cet axe (14), une moitié (15a) du canal (15) étant disposée dans une pièce stationnaire, coordonnée à la bobine (6), et l'autre moitié (15b) du canal (15) étant disposée dans l'armature (7) axialement mobile.

FIG.1

FIG. 2

FIG. 3

EP 0 301 171 B1